# EUROPÄISCHE PATENTSCHRIFT

(11) **EP 2 686 216 B1**
(45) Veröffentlichungstag und Bekanntmachung des Hinweises auf die Patenterteilung: **13.01.2016**
(21) Anmeldenummer: 12708010.9
(22) Anmeldetag: 07.03.2012
(51) Int. Cl.: B60W 10/06, B60W 10/08, B60W 20/00, B60W 30/188

(54) **VERFAHREN ZUM BETREIBEN EINES HYBRIDFAHRZEUGS**
METHOD FOR OPERATING A HYBRID VEHICLE
PROCÉDÉ PERMETTANT DE FAIRE FONCTIONNER UN VÉHICULE HYBRIDE

(30) Priorität: 18.03.2011 DE 102011005803
(43) Veröffentlichungstag der Anmeldung: 22.01.2014
(73) Patentinhaber: Bayerische Motoren Werke Aktiengesellschaft, 80809 München (DE)
(72) Erfinder: KRÄMER, Oliver, 80992 München (DE)
(86) Internationale Anmeldenummer: PCT/EP2012/053905
(87) Internationale Veröffentlichungsnummer: WO 2012/126733

(56) Entgegenhaltungen:
- EP-A1- 1 366 949
- EP-A1- 2 133 252
- US-A1- 2009 287 366

## Beschreibung

Die vorliegende Erfindung betrifft ein Verfahren zum Betreiben eines Hybridfahrzeugs gemäß dem Oberbegriff des Patentanspruches 1.

Ein derartiges Verfahren ist aus der EP 2 133 252 A1 bekannt.

Unter dem Begriff "Hybridfahrzeug" wird im Folgenden ein Fahrzeug mit einem Verbrennungsmotor und mindestens einer zur Erzeugung von Fahrzeugvortrieb vorgesehenen elektrischen Maschine verstanden. Ein derartiges Hybridfahrzeug kann wahlweise in einem ersten Betriebsmodus ausschließlich durch die elektrische Maschine (rein elektrischer Betriebsmodus) oder in einem zweiten Betriebsmodus betrieben werden, in dem sowohl der Verbrennungsmotor als auch die elektrische Maschine das Fahrzeug antreiben. Selbstverständlich kann das Fahrzeug auch in einem dritten, rein verbrennungsmotorischen Betriebsmodus betrieben werden.

Wird das Fahrzeug im ersten Betriebsmodus, d. h. rein elektrisch, betrieben, so muss der Fahrer das Gaspedal sehr feinfühlig betätigen. Überschreitet das vom Fahrer über das Gaspedal angeforderte Wunschantriebsmoment das von der elektrischen Maschine maximal erzeugbare Drehmoment, so wird durch Zuschalten des Verbrennungsmotors in den zweiten Betriebsmodus gewechselt, was der Fahrer z.B. beim Fahren in der Stadt vermeiden möchte. Die Situation, dass die Elektronik durch Zuschalten des Verbrennungsmotors in den zweiten Betriebsmodus wechselt, tritt insbesondere dann auf, wenn der Fahrer die von der elektrischen Maschine angebotene Leistung möglichst maximal ausschöpfen will, d.h. wenn an der oberen elektrischen Leistungsgrenze gefahren wird.

Aufgabe der Erfindung ist es, ein Verfahren zum Betreiben eines Hybridfahrzeugs anzugeben, bei dem der Verbrennungsmotor weniger häufig zugestartet wird als bei herkömmlichen Hybridfahren.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Der Erfindung liegt der Gedanke zugrunde, den Verbrennungsmotor nicht in allen Situationen zuzustarten, in denen das vom Fahrer über das Wählelement (z. B. Gaspedal) angeforderte Wunschantriebsmoment das von der elektrischen Maschine momentan bereitstellbare Maximalantriebsmoment überschreitet.

Der Kern der Erfindung besteht vielmehr darin, zumindest in manchen bzw. in definierten Betriebszuständen im ersten Betriebsmodus, d. h. rein elektrisch, weiterzufahren, selbst dann wenn das Wunschantriebsmoment (etwas) größer ist als das von der elektrischen Maschine momentan bereitstellbare Maximalantriebsmoment. Der Fahrer spürt also bei einer feinfühligen Betätigung des Wählelements, das im Folgenden als Gaspedal bezeichnet wird, dass das Gesamtantriebsmoment ab einem bestimmten Wunschantriebsmoment, d.h. ab einer bestimmten Stellung des Gaspedals, auch bei einer etwas stärkeren Betätigung des Gaspedals zunächst nicht zunimmt. Dadurch erhält der Fahrer die "Rückmeldung", dass der "Elektroantrieb" seine momentane Leistungs- bzw. Drehmomentgrenze erreicht hat.

Beim Verfahren des Anspruchs 1 führt also eine "geringfügige" Überschreitung des der "Leistungsgrenze" oder "Drehmomentgrenze" des Elektroantriebs entsprechenden Wunschantriebsmoments nicht unmittelbar zu einem Wechsel in den zweiten Betriebsmodus, d. h. nicht unmittelbar zum Starten des Verbrennungsmotors.

Vielmehr wird der erste Betriebsmodus beibehalten, solange das vom Fahrer über das Gaspedal angeforderte Wunschantriebsmoment um höchstens ein vorgegebenes Differenzantriebsmoment größer ist als das von der elektrischen Maschine momentan bereitstellbare Maximalantriebsmoment. Erreicht der Fahrer bei der Betätigung des Gaspedals die Stellung, welche dem von der elektrischen Maschine momentan bereitstellbaren Maximalantriebsmoment entspricht, so kann der Fahrer das Gaspedal um einen Pedalweg, der dem Differenzantriebsmoment entspricht, weiter durchdrücken, ohne dass der Verbrennungsmotor zugestartet wird.

Nach einer Weiterbildung der Erfindung ist die Größe des Differenzantriebsmoments davon abhängig, wie schnell der Fahrer das Gaspedal betätigt. Genauer gesagt hängt die Größe des Differenzantriebsmoments davon ab, wie schnell der Fahrer das Wählelement bei Überschreiten der Gaspedalstellung betätigt, welcher das von der elektrischen Maschine momentan bereitstellbare Maximalantriebsmoment entspricht. Wird die Gaspedalstellung durch eine Winkelkoordinate oder durch eine Wegkoordinate beschrieben, so ist das Differenzantriebsmoment eine Funktion der zeitlichen Ableitung der Winkel- oder Wegkoordinate, d. h. des Gradienten der Winkel- oder Wegkoordinate, welche die Gaspedalstellung beschreibt.

Nach einer Weiterbildung der Erfindung ist vorgesehen, dass in den zweiten Betriebsmodus oder in den dritten Betriebsmodus (rein verbrennungsmotorischer Betrieb) gewechselt wird, wenn das vom Fahrer über das Gaspedal angeforderte Wunschantriebsmoment größer wird als die Summe des von der elektrischen Maschine momentan bereitstellbaren Maximalantriebsmoments und des Differenzantriebsmoments. Tritt der Fahrer also bei Erreichen des von der elektrischen Maschine momentan bereitstellbaren Maximalantriebsmoments das Gaspedal weiter relativ stark durch, so wird der Verbrennungsmotor gestartet und rein verbrennungsmotorisch oder kombiniert verbrennungsmotorisch und elektromotorisch gefahren.

Bei einem Wechsel vom ersten in den zweiten oder dritten Betriebsmodus muss das Gesamtantriebsmoment mit dem das Hybridfahrzeug angetrieben wird, auf das vom Fahrer über das Gaspedal angeforderte Wunschantriebsmoment hochgefahren werden. Das "Hochfahren" kann gemäß einer vorgegebenen Funktion erfolgen. Beispielweise kann vorgesehen sein, dass das Gesamtantriebsmoment - soweit leistungsmäßig darstellbar - gemäß einer linearen Funktion von dem von dem von der elektrischen Maschine momentan bereitstellbaren Maximalantriebsmoment auf das Wunschantriebsmoment hochgefahren wird.

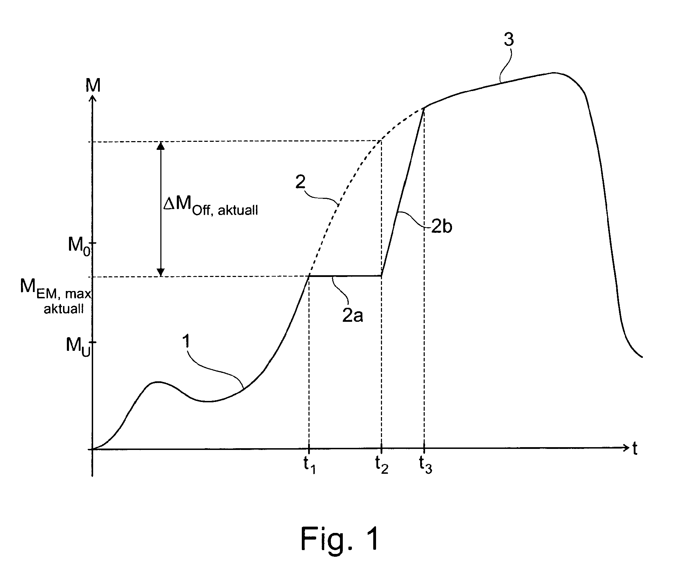

Im Folgenden wird die Erfindung im Zusammenhang mit der Zeichnung näher erläutert. Die einzige Figur 1 zeigt ein Drehmoment-Zeitdiagramm, anhand dessen das Grundprinzip der Erfindung erklärbar ist.

Figur 1 zeigt ein Diagramm, bei dem auf der Abszisse die Zeit t und auf der Ordinate das Drehmoment aufgetragen ist. Das Drehmoment M_{EM, max}, ₐₖₜᵤₑₗₗ repräsentiert das von der elektrischen Maschine - oder ganz allgemein gesprochen, das vom Elektroantrieb - des Fahrzeugs momentan erzeugbare Maximalantriebsmoment.

Das vom Elektroantrieb momentan bereitstellbare Maximalantriebsmoment M_{EM, max, aktuell} hängt von mehreren bzw. einer Vielzahl von Eingangsparametern ab, wie z. B. dem Ladezustandsniveau eines elektrischen Energiespeichers, welcher den Elektroantrieb bzw. die elektrische Maschine speist, dem Temperaturzustand des elektrischen Energiespeichers, der Drehzahl des Elektroantriebs bzw. der elektrischen Maschine, etc. In Abhängigkeit von den die Größe des Maximalantriebsmoments M_{EM, max, aktuell} bestimmenden Parametern liegt das momentan bereitstellbare Maximalantriebsmoment M_{EM, max, aktuell} in einem Bereich zwischen einem unteren Drehmoment M_{U} und einem oberen Drehmoment M_{O}.

Der durch die Kurvenabschnitte 1, 2 und 3 zusammengesetzte Kurvenverlauf repräsentiert exemplarisch den Verlauf eines von einem Fahrer über ein Wählelement, z. B ein Gaspedal, angeforderten "Wunschantriebsmoments".

Das Wunschantriebsmoment ist das gewünschte Gesamtantriebsmoment, das vom Fahrer über das Gaspedal angefordert wird. In dem Kurvenabschnitt 1 ist das Wunschantriebsmoment kleiner als das von der elektrischen Maschine momentan bereitstellbare Maximalantriebsmoment. Dies bedeutet, das Fahrzeug kann problemlos rein elektrisch betrieben werden, wobei das Gesamtantriebsmoment entsprechend dem vom Fahrer über das Gaspedal vorgegebenen Wunschantriebsmoment eingeregelt werden kann.

Im Zeitpunkt t₁ erreicht das Wunschantriebsmoment das von der elektrischen Maschine aktuell bereitstellbare Maximalantriebsmoment M_{EM, max, aktuell}.

Bei dem in Figur 1 gezeigten Beispiel drückt der Fahrer bei Erreichen der Leistungsgrenze des Elektroantriebs (M_{EM, max, aktuell}) das Gaspedal weiter durch, was durch den gestrichelt dargestellten Kurvenabschnitt 2 repräsentiert wird. Im Bereich des Kurvenabschnitts 2 ist das Wunschantriebsmoment größer als das von der elektrischen Maschine momentan bereitstellbare Maximalantriebsmoment M_{EM, max, aktuell}. Wenngleich der Fahrer das Gaspedal weiter durchdrückt, verbleibt das Fahrzeug im ersten, d. h. rein elektrischen Betriebsmodus, was durch den Kurvenabschnitt 2a repräsentiert wird. Obwohl der Fahrer ein Wunschantriebsmoment anfordert, das größer als das von der elektrischen Maschine momentan bereitstellbare Maximalantriebsmoment M_{EM, max, aktuell} ist, wird das Gesamtantriebsmoment zunächst auf dem von der elektrischen Maschine momentan bereitstellbaren Maximalantriebsmoment M_{EM, max, aktuell} gehalten.

Da der Fahrer bei dem in Figur 1 gezeigten "Fahrbeispiel" das Gaspedal sehr weit durchdrückt, wird in den zweiten bzw. dritten Betriebsmodus gewechselt und der Verbrennungsmotor gestartet. Im Zeitpunkt t₂ überschreitet das vom Fahrer über das Gaspedal angeforderte Wunschantriebsmoment das von der elektrischen Maschine momentan bereitstellbare Maximalantriebsmoment M_{EM, max, aktuell} um einen Betrag ΔM_{Diff, aktuell}. Das Überschreiten des von der elektrischen Maschine momentan bereitstellbaren Maximalantriebsmoments M_{EM, max, aktuell} um das Differenzdrehmoment ΔM_{Diff, aktuell} wird als Auslösekriterium für das Zustarten des Verbrennungsmotors gewertet. Der Verbrennungsmotor wird also im Zeitpunkt t₂ zugestartet. Daraufhin wird das Gesamtantriebsmoment gemäß einer durch den Kurvenabschnitt 2b repräsentierten, vorgegebenen Rampenfunktion auf das vom Fahrer über das Gaspedal angeforderte Wunschantriebsmoment "hochgefahren". Im Zeitpunkt t₃ erreicht das Gesamtantriebsmoment das vom Fahrer über das Gaspedal angeforderte Wunschantriebsmoment. Anschließend wird im zweiten bzw. dritten Betriebsmodus das Gesamtantriebsmoment entsprechend dem vom Fahrer über das Gaspedal angeforderten Wunschantriebsmoment geregelt (vgl. Kurvenabschnitt 3).

## Patentansprüche

1. Verfahren zum Betreiben eines Hybridfahrzeugs, das einen Verbrennungsmotor und einen zur Erzeugung von Fahrzeugvortrieb vorgesehenen Elektroantrieb aufweist, wobei das Fahrzeug wahlweise
- in einem ersten Betriebsmodus ausschließlich durch den Elektroantrieb oder
- in einem zweiten Betriebsmodus durch den Verbrennungsmotor und durch den Elektroantrieb oder
- in einem dritten Betriebsmodus ausschließlich durch den Verbrennungsmotor angetrieben wird, wobei
Wunschantriebsmoment vorgibt, und
der erste Betriebsmodus zumindest in manchen Betriebszuständen selbst dann beibehalten wird, wenn das Wunschantriebsmoment größer ist als ein von der elektrischen Maschine momentan bereitstellbares Maximalantriebsmoment (M_{EM, max, aktuell}),
**dadurch gekennzeichnet, dass**
der erste Betriebsmodus beibehalten wird, solange das Wunschantriebsmoment um höchstens ein vorgegebenes Differenzantriebsmoment (ΔM_{Diff, aktuell}) größer ist als das von der elektrischen Maschine momentan bereitstellbare Maximalantriebsmoment (M_{EM, max, aktuell}).

2. Verfahren nach Anspruch 1, **dadurch gekennzeichnet, dass** die Größe des Differenzantriebsmoment (ΔM_{Diff, aktuell}) in Abhängigkeit von der Geschwindigkeit gewählt wird, mit der der Fahrer das Wählelement betätigt, insbesondere mit der der Fahrer das Wählelement bei Überschreiten einer Stellung betätigt, welche das von dem Elektroantrieb momentan bereitstellbare Maximalantriebsmoment (M_{EM, max, aktuell}) repräsentiert.

3. Verfahren nach Anspruch 1 oder 2, **dadurch gekennzeichnet, dass** in den zweiten oder in den dritten Betriebsmodus gewechselt wird, wenn das Wunschantriebsmoment größer ist als die Summe des von dem Elektroantrieb momentan bereitstellbaren Maximalantriebsmoments (M_{EM, max, aktuell}) und des Differenzantriebsmoments (ΔM_{Diff, aktuell}).

4. Verfahren nach einem der vorangehenden Ansprüche, **dadurch gekennzeichnet, dass** bei einem Wechsel von dem ersten in den zweiten oder dritten Betriebsmodus ein Gesamtantriebsmoment, mit dem das Hybridfahrzeug angetrieben wird, entsprechend einer vorgegebenen Funktion von dem von dem Elektroantrieb bereitstellbaren Maximalantriebsmoment (M_{EM, max, aktuell}) auf das Wunschantriebsmoment erhöht wird.

5. Verfahren nach Anspruch 4, **dadurch gekennzeichnet, dass** es sich bei der Funktion um eine über der Zeit (t) lineare Funktion (2b) handelt.

## Claims

1. A method for operating a hybrid vehicle which has an internal combustion engine and an electric drive provided to generate propulsion of the vehicle, the vehicle either being driven
- in a first operating mode only by the electric drive or
- in a second operating mode by the internal combustion engine and by the electric drive or
- in a third operating mode only by the internal combustion engine, wherein
a desired drive torque is preset, and
the first operating mode is maintained at least in some operating conditions even if the desired drive torque is greater than a maximum drive torque (M_{EM, max, current}) which can be currently provided by the electric machine,
**characterised in that**
the first operating mode is maintained as long as the desired drive torque is greater by at most a preset differential drive torque (M_{Diff, current}) than the maximum drive torque (M_{EM, max, current}) which can be currently provided by the electric machine.

2. A method according to claim 1, **characterised in that** the value of the differential drive torque (M_{Diff, current}) is selected as a function of the speed at which the driver actuates the selection element, especially at which the driver actuates the selection element while passing beyond a position which represents the maximum drive torque (M_{EM, max, current}) which can be currently provided by the electric drive.

3. A method according to claim 1 or claim 2, **characterised in that** the operating mode is changed to the second or third operating mode when the desired drive torque is greater than the sum of the maximum drive torque (M_{EM, max,current}) which can be currently provided by the electric drive and of the differential drive torque (M_{Diff, current}).

4. A method according to any one of the preceding claims, **characterised in that** when the operating mode is changed from the first operating mode to the second or third operating mode, a total drive torque, by which the hybrid vehicle is driven, is increased according to a preset function from the maximum drive torque (M_{EM, max,current}) which can be provided by the electric drive to the desired drive torque.

5. A method according to claim 4, **characterised in that** the function is a linear function (2b) over time (t).

## Revendications

1. Procédé de gestion d'un véhicule hybride équipé d'un moteur à combustion interne et d'un entraînement électrique destiné à produire un entraînement par poussée du véhicule, le véhicule pouvant sélectivement être entraîné :
- dans un premier mode de fonctionnement exclusivement par l'entraînement électrique, ou
- dans un second mode de fonctionnement par le moteur à combustion interne et par l'entraînement électrique, ou
- dans un troisième mode de fonctionnement uniquement par le moteur à combustion interne,
- un couple d'entraînement souhaité étant prédéfini et le premier mode de fonctionnement étant maintenu au moins dans certains états de fonctionnement même si le couple d'entraînement souhaité est supérieur au couple d'entraînement maximum pouvant actuellement être fourni par la machine électrique (M_{EM, max, aktuell}),
**caractérisé en ce que**
le premier mode de fonctionnement est maintenu tant que le couple d'entraînement souhaité est supérieur d'au plus un couple d'entraînement différentiel prédéfini (ΔM_{Diff, aktuell}) au couple d'entraînement maximum (M_{EM, max, aktuell}) pouvant être actuellement fourni par le moteur électrique.

2. Procédé conforme à la revendication 1,
**caractérisé en ce que**
la grandeur du couple d'entraînement différentiel (ΔM_{Diff, aktuell}) est choisie en fonction de la vitesse avec laquelle le conducteur actionne l'élément de sélection, en particulier avec laquelle le conducteur actionne l'élément de sélection lors du dépassement d'une position qui représente le couple d'entraînement maximum (M_{EM, max, aktuell}) pouvant être actuellement fourni par l'entraînement électrique.

3. Procédé conforme à la revendication 1 ou 2,
**caractérisé en ce que**
l'on effectue une commutation dans le second ou dans le troisième mode de fonctionnement lorsque le couple d'entraînement souhaité est supérieur à la somme du couple d'entraînement maximum (M_{EM, max, aktuell}) pouvant être actuellement fourni par l'entraînement électrique et le couple d'entraînement différentiel (ΔM_{Diff, aktuell}).

4. Procédé conforme à l'une des revendications précédentes,
**caractérisé en ce que**
lors d'une commutation du premier au second ou au troisième modes de fonctionnement, le couple d'entraînement total avec lequel le véhicule hybride est entraîné est augmenté du couple d'entraînement maximum (M_{EM, max, aktuell}) pouvant être fourni par l'entraînement électrique, au couple d'entraînement souhaité conformément à une fonction prédéfinie.

5. Procédé conforme à la revendication 4,
**caractérisé en ce que**
la fonction est une fonction (2b) linéaire en fonction du temps (t).
